# EUROPÄISCHE PATENTSCHRIFT

(11) **EP 1 612 495 B1**
(45) Veröffentlichungstag und Bekanntmachung des Hinweises auf die Patenterteilung: **03.11.2010**
(21) Anmeldenummer: 05104814.8
(22) Anmeldetag: 02.06.2005
(51) Int. Cl.: F25D 3/11, F25D 3/12

(54) **Verfahren und Vorrichtung zur Produktkühlung**
Method and apparatus for cooling products
Procédé et dispositif de réfrigération de produits

(30) Priorität: 01.07.2004 DE 102004031761
(43) Veröffentlichungstag der Anmeldung: 04.01.2006
(73) Patentinhaber: Messer Group GmbH, 65843 Sulzbach (DE)
(72) Erfinder: Hennequin, James, 77410 F-Annet sur Marne (FR); Herzog, Friedhelm, 47803 Krefeld (DE)

(56) Entgegenhaltungen:
- US-A- 3 871 185
- US-A- 4 072 026
- US-A- 4 237 695
- US-A- 4 755 118

## Beschreibung

Die Erfindung betrifft ein Verfahren zum Kühlen von Produkten gemäß dem Oberbegriff von Anspruch 1. Die Erfindung betrifft ferner eine Vorrichtung zur Durchführung dieses Verfahrens.

Nach dem Stand der Technik werden kontinuierlich hergestellte Produkte beispielsweise im Lebensmittelbereich zur Weiterverarbeitung, Verpackung oder Konservierung im Durchlaufverfahren gekühlt. Dabei durchlaufen die im Verlauf des Herstellungsverfahrens, z.B. in einem Extruder, erhitzten Produkte Kühltunnel, die entweder mit Hilfe üblicher Kältemaschinen betrieben oder bei denen die Wärme durch Einleitung von tiefkalt verflüssigten Gasen (i.d.R. Stickstoff oder Kohlendioxid) aus den Produkten abgeführt wird. Der Einsatz von Kältemaschinen hat dabei oft den Nachteil, dass wegen der nur geringen Temperaturdifferenz zwischen Produkt und Kühlmedium die Abkühlgeschwindigkeit gleichfalls nur sehr klein ist und das Produkt über einen für eine wirtschaftliche Produktion unzuträglich langen Zeitraum im Kühltunnel verweilen muss. Dieser Nachteil wird beim Einsatz von tiefkalt verflüssigten Gasen vermieden. Bei diesem Verfahren werden die noch warmen Produkte mittels einer geeigneten Transportvorrichtung, beispielsweise einem Förderband, durch einen lang gestreckten Kühltunnel geführt und dabei mit einem Kältemittel, beispielsweise Flüssigstickstoff, besprüht. Da jedoch tiefkalt verflüssigte Gase den größten Teil ihrer Kälte bei der Verdampfung abgeben, die Verdampfungstemperatur aber aus physikalischen Gründen festgelegt ist, entsteht hierbei häufig der Nachteil, dass die Kälte nur ungleichmäßig den Produkten zugeführt wird und die Produkte lokal unterkühlt werden, was oft zu Qualitätsverlust oder Produktschädigung führt.

Ein gattungsgemäßes Verfahren ist beispielsweise bekannt aus US-A-4 072 026 oder US-A-4 237 695.

Aufgabe der vorliegenden Erfindung ist daher, ein Verfahren sowie eine Vorrichtung zur Kühlung von Produkten anzugeben, das bzw. die zum einen eine effiziente und schnelle Kühlung des Produkts gewährleistet, zum anderen jedoch produktschonend einsetzbar ist.

Diese Aufgabe wird mit einem Verfahren der eingangs genannten Art durch die Merkmale des Kennzeichens von Anspruch 1 gelöst.

Das Kühlmedium wird zumindest teilweise dem Kühlkanal entnommen und tritt mit einem Kältemittel in Wärmekontakt, wobei die vom Produkt aufgenommene Wärme abgegeben wird. Anschließend wird das Kühlmedium wieder dem Kühlkanal zugeführt. Durch diesen Kreislauf findet also eine indirekte Kühlung des Produkts statt. Ein direkter Kontakt des Produkts mit dem Kältemittel und die damit verbundenen Nachteile werden verhindert. Die Kühlung erfolgt damit schonend.

Besonders zweckmäßig ist es, das Kühlmedium im Kühlkanal im Gegenstrom zum Produkt zu führen. Hierdurch erfolgt eine besonders schonende Kühlung des Produkts, weil die Temperaturgradienten im Produktstrom und im Kühlmediumsstrom gleichsinnig verlaufen. Je nach Konstruktion des Gesamtsystems oder des gewünschten Kühlprozesses sind jedoch auch andere Strömungsführungen im Rahmen der Erfindung vorstellbar und vorteilhaft, etwa Gleichstrom, Querstrom, Kreuzstrom oder kombinierte Strömungsführungen.

Eine besonders zweckmäßige Ausgestaltung der Erfindung sieht vor, die Menge und/oder die Temperatur des dem Kühlkanal entnommenen oder zugeführten Kühlmediums auf einen vorgegebenen Wert oder nach einem vorgegebenen Programm zu regeln.

Als besonders vorteilhaftes Kältemittel zur Kühlung des Kühlmediums erweist sich ein verflüssigtes oder kaltes gasförmiges Gas, beispielsweise Stickstoff oder Kohlendioxid.

Um die Energieeffizienz des erfindungsgemäßen Verfahrens weiter zu verbessern, wird das zur Kühlung des Kühlmediums eingesetzte und erwärmte Kältemittel anschließend dem Kühlkanal zugeführt und durch Ausnutzung der Restkälte zur direkten Produktkühlung eingesetzt. Nicht in dieser Weise verwendetes Kältemittel kann zur Inertisierung oder für eine sonstige Verwendung genutzt werden.

Die Aufgabe der Erfindung wird auch durch eine Vorrichtung zur Durchführung des Verfahrens mit den Merkmalen des Patentanspruchs 5 gelöst.

Die erfindungsgemäße Vorrichtung weist also einen Kühlkanal mit einem Produkteingang und einem Produktausgang sowie einen Entnahmeanschluss und einen Zuführungsanschluss zur Entnahme bzw. Zuführung eines Kühlmediums in den Kühlkanal auf. Der Zuführungsanschluss ist dabei mit einem Wärmetauscher zur Kühlung des Kühlmediums durch Wärmetausch mit einem Kältemittel strömungsverbunden. Zwischen Entnahmeanschluß und Zuführungsanschluß ist eine Kühlmediumsleitung vorgesehen, wobei die Kältemittelzuleitung im Anschluß an den Wärmetauscher in die Kühlmediumsleitung, strömungstechnisch vor oder hinter dem Wärmetauscher, einmündet. Die erfindungsgemäße Vorrichtung ermöglicht eine schnelle und zugleich effiziente Kühlung des Produkts. Der Wärmetauscher kann dabei derart aufgebaut sein, dass die Stoffströme von Kühlmedium und Kältemittel voneinander getrennt geführt werden, und nur ein Wärmeübergang zwischen beiden Medien stattfindet; oder der Wärmetausch erfolgt durch direkte Einleitung des Kältemittels in den Kühlmediumsstrom. Durch Vermischung des Kühlmediums mit dem Kältemittel, also beispielsweise einem tiefkalt verflüssigten Gas entsteht im letzteren Fall das kalte, dem Kühlkanal zuzuführende Kühlmedium. Es ist auch möglich, anstelle oder ergänzend zu einem Wärmetauscher einen Kaltgasmischer einzusetzen, bei dem Stoffströme von Gasen unterschiedlicher Temperatur vermischt werden. In diesem Falle erfolgt die Wärmeübertragung direkt über die Zuführung des kaltem Gases.

Bevorzugt ist der Kühlkanal im Bereich des Produkteingangs und/oder des Produktausgangs mit einer Gasschleuse ausgerüstet. Hierdurch wird der Eintritt von Umgebungsgas, das eine für den Kühlprozess unerwünschte Zusammensetzung oder Temperatur aufweist, unterbunden.

Zweckmäßigerweise ist der Kühlkanal gasdicht mit einer Einrichtung zur Herstellung des Produkts, etwa mit einem Extruder, verbunden. Hierdurch werden unerwünschte Einflüsse der Umgebung weiter vermindert.

Eine besonders bevorzugte Ausgestaltung der Erfindung sieht vor, dass der Kühlkanal im Wesentlichen senkrecht angeordnet ist. Das Produkt durchläuft den Kühlkanal also unter der Wirkung der Schwerkraft. Auf aufwändige Transportsysteme, die in direktem mechanischen Kontakt mit dem Produkt stehen und bereits dadurch die Qualität des Produkts beeinträchtigen können, kann also verzichtet werden. Durch die Kombination des erfindungsgemäßen Kühlverfahrens, bei dem eine rasche und schonende Kühlung der Produkte erzielt wird, mit der senkrechten Anordnung des Kühlkanals, durch die während des Kühlvorgangs ein direkten mechanischer Kontakt des Produkts mit einer Transport- oder sonstigen Vorrichtung vermieden wird, wird eine qualitativ besonders hochwertige Behandlung insbesondere von empfindlichen Produkten erzielt.

Anhand der Zeichnungen sollen nachfolgend Ausführungsbeispiele der Erfindung näher erläutert werden.

In schematischen Ansichten zeigen:
Fig. 1: Eine Vorrichtung zum Kühlen in einer ersten Ausführungsform und
Fig. 2: Eine Vorrichtung zum Kühlen in einer weiteren Ausführungsform.

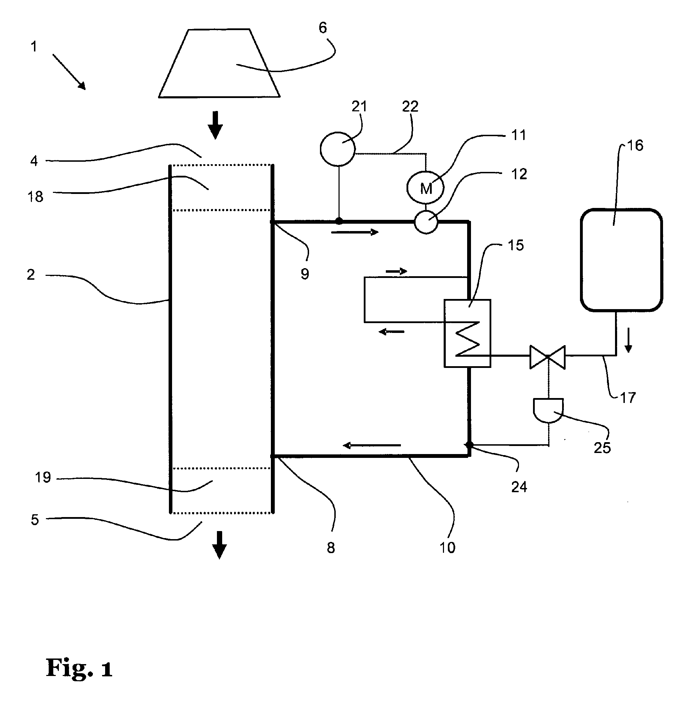

Die in Fig. 1 gezeigte Vorrichtung 1 umfasst einen im wesentlichen senkrecht angeordneten Kühlkanal 2 mit einem Produkteingang 4 und einem Produktausgang 5. Das aus einer Herstellungseinrichtung, beispielsweise einem Extruder 6, strömende, durch den Produktionsvorgang erwärmte Produkt tritt am Produkteingang 4 in den Kühlkanal 2 ein und verlässt den Kühlkanal 2 am Produktausgang 5. Bei dem Produkt kann es sich beispielsweise um teilchen-, körner- flockenartige oder aber um lang gestreckte Produkte, insbesondere aus dem Lebensmittelbereich, handeln. Zur Kühlung des Produkts im Kühlkanal 2 dient ein gasförmiges Kühlmedium, das im Ausführungsbeispiel nach Fig. 1 im Gegenstrom zum Produkt durch den Kühlkanal 2 geführt wird. Dazu ist im Bereich des unteren Endes des Kühlkanals 2 ein Eingangsstutzen 8 und in einem oberen Bereich ein Entnahmestutzen 9 vorgesehen, die jeweils in den Innenraum des Kühlkanals 2 einmünden. Der Entnahmestutzen 9 ist mit einer Kühlmediumsleitung 10 verbunden, an der in der durch Pfeile angedeuteten Strömungsrichtung nacheinander eine mittels Motor 11 angetriebene Fördereinrichtung 12, beispielsweise ein Gebläse, zum Absaugen des Kühlmediums aus dem Kühlkanal 2 und ein Wärmetauscher 15 angeordnet ist. Schließlich mündet die Kühlmediumsleitung 10 am Eingangsstutzen 8 wieder in den Kühlkanal 2 ein. Im Wärmetauscher 15 besteht ein thermischer Kontakt zu einem Kältemittel, im Ausführungsbeispiel ein verflüssigtes Gas, etwa flüssiger Stickstoff, das aus einem Tank 16 über eine Kältemittelzuleitung 17 herangeführt und im Wärmetauscher 15 thermisch mit der Kühlmediumsleitung 10 für das Kühlmedium verbunden ist. Anstelle von verflüssigtem Gas können jedoch auch andere flüssige oder gasförmige Kältemittel zum Einsatz kommen, wie beispielsweise Kühlwasser, Sole oder Luft oder andere Gase. Im Anschluss an den Wärmetauscher mündet die Kältemittelzuleitung 17 im Ausführungsbeispiel strömungstechnisch noch vor dem Wärmetauscher 15 in die Kühlmediumsleitung 10 ein. Im Rahmen der Erfindung ist es jedoch auch möglich, die Kältemittelzuleitung strömungstechnisch hinter dem Wärmetauscher 15 im die Kühlmediumsleitung 10 einmünden zu lassen. Jeweils an seinen beiden Stirnseiten ist der Kühlkanal 2 mit Gasschleusen 18,19 versehen. Dabei handelt es sich beispielsweise um ringförmig an der jeweiligen Mündungsöffnung des Kühlkanals 2 angeordnete Inertgasdüsen, mittels denen der Eintritt von Umgebungsatmosphäre unterbunden wird, ohne dabei den Durchgang des Produkts durch den Kühlkanal 2 zu behindern. Die Leistung des Kühlkanals 2 ist im Wesentlichen bestimmt durch die Temperatur des Kühlgases am Eingangsstutzen 8 und durch den Kühlgasmengenstrom durch die Zuleitung 10. Um die Kühlung im Kühlkanal 2 beeinflussen zu können, werden daher Temperatur und Mengenstrom des Kühlmediums Regelkreisen unterworfen. Zur Regulierung des Mengenstroms ist kurz hinter dem Entnahmestutzen 9 ein Durchlaufmessgerät 21 angeordnet, das mittels einer Steuerleitung 22 den Motor 11 der Fördereinrichtung 12 ansteuert und dabei die Motorleistung auf einen vorgegebenen Wert oder nach einem vorgegebenen Programm einstellt. Die Regelung der Temperatur des Kühlmediums erfolgt über die Zufuhr des Kältemittels zum Wärmetauscher 15. Dabei wird an einem Temperatursensor 24 die Temperatur des Kühlmediums in der Kühlmediumsleitung 10 erfasst. Nach einem vorgegebenen Programm wird hieraus mittels eines steuerbaren Ventils 25 der Durchfluss des Kältemittels durch den Wärmetauscher 15 und damit die Kühlleistung reguliert. Leistung und Temperatur des Kühlmediums im Kühlkanal 2 können somit unabhängig voneinander geregelt werden. Anstelle von oder zusätzlich zu Mengenstrom und Temperatur können auch andere physikalische Parameter als Regelgrößen eingesetzt werden, etwa Volumenströme, Drücke, Temperaturen in der Kühleinrichtung oder Prozessdaten aus vor- oder nachgeschalteten Systemen.

Beim bestimmungsgemäßen Einsatz der Vorrichtung 1 sinkt das im Extruder 6 erzeugte Produkt durch den Produkteingang 4 in den Kühlkanal 2 ein, wie durch Pfeile angedeutet. Während des Durchlaufens durch den Kühlkanal 2 wird das Produkt durch thermischen Kontakt mit dem gasförmigen, von unten nach oben geführten Kühlmedium gekühlt. Das dabei sich erwärmende Kühlmedium wird am Entnahmestutzen 9 abgesaugt und durch thermischen Kontakt mit dem Kältemittel im Wärmetauscher 15 gekühlt. Das sich durch den Wärmetausch mit dem Kühlmedium erwärmte Kältemittel wird diesem beigemischt und erhöht dadurch die Kühlleistung. Das Gemisch aus Kühlmedium und zugeführtem Kältemittel strömt über den Eingangsstutzen 8 wieder in den Kühlkanal 2 ein. Der durch die Zugabe des Kältemittels entstehende leichte Überdruck im Innern des Kühlkanals 2 verhindert in Zusammenwirken mit den Gasschleusen 18,19 wirkungsvoll das Eindringen von Umgebungsluft in den Kühlkanal 10. Überschüssiges Kühlmedium entweicht durch die Gasschleusen 18, 19 hindurch in die Umgebung.

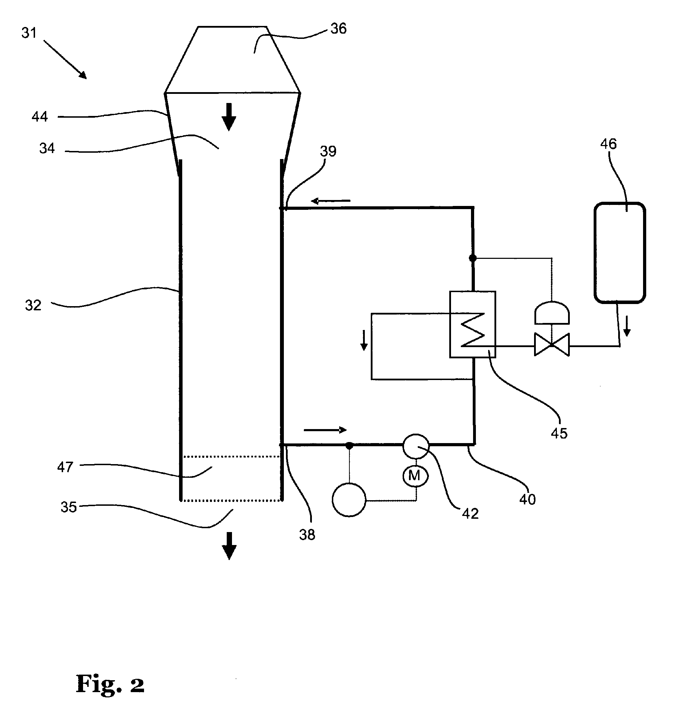

Das Ausführungsbeispiel nach Fig. 2 unterscheidet sich vom Ausführungsbeispiel nach Fig. 1 im Wesentlichen durch eine Strömungsführung des Kühlmediums, die im Innern des Kühlkanals gleichsinnig wie der Produktstrom verläuft. Die Vorrichtung 32 umfasst gleichfalls einen im Wesentlichen senkrecht angeordneten Kühlkanal 32 mit einem einem Extruder 36 zugewandten Produkteingang 34 und einem Produktausgang 35. Das im Kühlkanal 32 befindliche Kühlgas wird an einem Entnahmestutzen 38, der sich im unteren Bereich des Kühlkanals 32 befindet, mittels einer Fördereinrichtung 42 abgesaugt und über eine Zuleitung 40 einem Wärmetauscher 45 zugeführt, dort durch thermischen Kontakt mit einem aus einem Flüssiggastank 46 herangeführten Kältemittel gekühlt und an einem Eingangsstutzen 39 wieder dem Kühlkanal 32 zugeführt. Innerhalb des Kühlkanals 32 strömt das Kühlmedium also gleichsinnig zum Produkt. Die Regelung von Temperatur und Mengenstrom des Kühlmediums in der Zuleitung 40 erfolgt in gleicher Weise wie bei der Vorrichtung 1 aus Fig. 1. Insbesondere durch diese Anordnung ist es möglich, zwischen dem Produkteingang 34 des Kühlkanals 32 und dem Extruder 36 eine zumindest weitgehend gasdichte Verbindung 44, etwa eine Schlauchverbindung, vorzusehen, mittels der wirkungsvoll verhindert wird, dass das noch warme Produkt aus dem Extruder 36 mit der Umgebungsatmosphäre in Kontakt kommt. Aufgrund der gasdichten Verbindung 44 erübrigt sich eine Gasschleuse im Bereich des Produkteingangs 34. Die Vorrichtung 31 weist demzufolge nur eine Gasschleuse 47 im Bereich des Produktausgangs 35 des Kühlkanals 32 auf; eine vereinfachter Aufbau der Vorrichtungen 1 und 31 kann jedoch auch auf Gasschleusen ganz verzichten.

Durch die unabhängige Steuerung von Leistung und Temperatur kann mittels der Vorrichtungen 1, 31 eine sehr schonende Kühlung insbesondere von empfindlichen Produkten aus dem Lebensmittelbereich durchgeführt werden. Außerdem ist eine nach diesem Prinzip arbeitende Vorrichtung sehr gut auch bei stark schwankenden Kälteanforderungen zu betreiben.

### Ausführungsbeispiel:

Drahtförmige Produkte, beispielsweise Teigwaren mit einem Durchmesser von 2 bis 10 mm, werden mit einem Extruder unter hohem Druck kontinuierlich in einer Menge von 1000 kg/h produziert. Durch die Verdichtung im Extruder entsteht eine hohe Verformungswärme. Deshalb ist eine Temperaturabsenkung der Produkte nach der Extrusion von ca. 60-90 °C auf etwa 20°C innerhalb von ca. 5 - 50 Sekunden erforderlich, ansonsten blähen sie auf und verlieren ihre Qualität.

Um diese Bedingung zu erfüllen, wird in der Vorrichtung 1 das Kühlmedium in der Zuleitung 10 mit einem Mengenstrom von 2000 kg/h hindurchgeführt und durch den Kontakt mit flüssigem Stickstoff im Wärmetauscher 15 von einer Temperatur von ca. 10°C im Bereich des Entnahmestutzens 9 auf eine Temperatur von minus 30°C im Bereich des Eingangsstutzens 8 gekühlt. Auf diese Weise wird im Kühlkanal die erforderliche Kühlleistung von 22 kW erbracht.

Die durch die beschriebene Verfahrensweise erzielbare sehr rasche und dennoch schonende Kühlwirkung ermöglicht den Betrieb der Vorrichtungen 1 und 31 insbesondere auch bei sehr empfindlichen Produkten, die ansonsten bei der Zuführung in einen senkrecht angeordneten Kühlkanal im noch warmen Zustand unter der Wirkung ihrer eigenen Masse rasch auseinanderfallen würden. Zugleich ermöglicht die senkrechte Anordnung des Kühlkanals einen berührungsfreien und daher besonders schonenden Transport der Produkte durch den Kühlkanal hindurch. Die Anwendung des erfindungsgemäßen Verfahrens und der erfindungsgemäßen Vorrichtung ist dabei keineswegs auf den Lebensmittelsektor beschränkt; vielmehr sind vielfältige Anwendungsmöglichkeiten anderen Bereichen denkbar, etwa in der Metallurgie oder der Kunststoffherstellung. Beispielsweise gelingt mit dem beschriebenen Verfahren auch die Herstellung von Sinterkörpern.

### Bezuaszeichenliste

- 1.: Vorrichtung
- 2.: Kühlkanal
- 3.: -
- 4.: Produkteingang
- 5.: Produktausgang
- 6.: Extruder
- 7.: -
- 8.: Eingangsstutzen
- 9.: Entnahmestutzen
- 10.: Kühlmediumsleitung
- 11.: Motor
- 12.: Fördereinrichtung
- 13.: -
- 14.: -
- 15.: Wärmetauscher
- 16.: Tank
- 17.: Kältemittelzuleitung
- 18.: Gasschleuse
- 19.: Gasschleuse
- 20.: -
- 21.: Durchflussmessgerät
- 22.: Steuerleitung
- 23.: -
- 24.: Temperatursensor
- 25.: steuerbares Ventil
- 26.: -
- 27.: -
- 28.: -
- 29.: -
- 30.: -
- 31.: Vorrichtung
- 32.: Kühlkanal
- 33.: -
- 34.: Produkteingang
- 35.: Produktausgang
- 36.: -
- 37.: -
- 38.: Eingangsstutzen
- 39.: Entnahmestutzen
- 40.: Zuleitung
- 41.: -
- 42.: Fördereinrichtung
- 43.: -
- 44.: gasdichte Verbindung
- 45.: Wärmetauscher
- 46.: Tank
- 47.: Gasschleuse

## Patentansprüche

1. Verfahren zum Kühlen von Produkten, bei dem ein Produkt einen Kühlkanal durchläuft und in dem Kühlkanal (2,32) mit einem Kühlmedium in Wärmeaustausch tritt, wobei
das Kühlmedium zumindest teilweise an einer Entnahmestelle aus dem Kühlkanal (2,32) entnommen wird, das entnommene Kühlmedium mit einem Kältemittel in Wärmeaustausch tritt und anschließend an einer Einspeisestelle wieder dem Kühlkanal (2,32) zugeführt wird,
**dadurch gekennzeichnet,**
**dass** das Kältemittel nach dem Wärmekontakt mit dem Kühlmedium zumindest teilweise dem Kühlkanal (2,32) zugeführt wird.

2. Verfahren nach Anspruch 1, **dadurch gekennzeichnet, dass** das Kühlmedium im Gegenstrom zum Produkt durch den Kühlkanal (2,32) geleitet wird.

3. Verfahren nach Anspruch 1 oder 2, **dadurch gekennzeichnet, dass** die Menge und/oder Temperatur des dem Kühlkanal (2,32) entnommenen oder zugeführten Kühlmediums auf einen vorgegebenen Wert oder nach einem vorgegebenen Programm geregelt wird.

4. Verfahren nach einem der vorhergehenden Ansprüche, **dadurch gekennzeichnet, dass** als Kältemittel ein verflüssigtes oder kaltes gasförmiges Gas, beispielsweise Stickstoff oder Kohlendioxid zum Einsatz kommt.

5. Vorrichtung zur Durchführung des Verfahrens nach einem der vorhergehenden Ansprüche, mit einem Kühlkanal (2,32), der einen Produkteingang (4,34) und einen Produktausgang (5,35) sowie einen Entnahmeanschluss (9,39), einen Zuführungsanschluss (8,38) für ein Kühlmedium und eine Kühlmediumsleitung (10, 40) zwischen Entnahmeanschluss (9, 39) und Zuführungsanschluss (8, 38) aufweist, wobei der Zuführungsanschluss (8,38) mit einem Wärmetauscher (15,45), zwecks Wärmetausch mit einem über eine Kältemittelzuleitung (17) herangeführten Kältemittel strömungsverbunden ist und die Kältemittelzuleitung (17) im Anschluss an den Wärmetauscher (15, 45) in die Kühlmediumsleitung (10, 40), strömungstechnisch vor oder hinter dem Wärmetauscher (15, 45), einmündet.

6. Vorrichtung nach Anspruch 5, **dadurch gekennzeichnet, dass** der Kühlkanal (2,32) im Bereich des Produkteingangs (4,34) und/oder des Produktausgangs (5,35) mit einer Gasschleuse (18,19,47) ausgerüstet ist.

7. Vorrichtung nach Anspruch 5, **dadurch gekennzeichnet, dass** der Kühlkanal (2,32) im Wesentlichen gasdicht mit einer Einrichtung zur Herstellung des Produkts, etwa einem Extruder (6,36), verbunden ist.

8. Vorrichtung nach einer der Ansprüche 5 bis 7, **dadurch gekennzeichnet, dass** der Kühlkanal (2,32) im Wesentlichen senkrecht angeordnet ist.

## Claims

1. Method for the cooling of products, in which a product runs through a cooling duct and comes into heat exchange with a cooling medium in the cooling duct (2, 32), the cooling medium being extracted at least partially from the cooling duct (2, 32) at an extraction point, and the extracted cooling medium coming into heat exchange with a refrigerant and subsequently being supplied to the cooling duct (2, 32) again at a feed point, **characterized in that** the refrigerant is supplied at least partially to the cooling duct (2, 32) after thermal contact with the cooling medium.

2. Method according to Claim 1, **characterized in that** the cooling medium is conducted through the cooling duct (2, 32) in countercurrent to the product.

3. Method according to Claim 1 or 2, **characterized in that** the quantity and/or temperature of the cooling medium extracted from or supplied to the cooling duct (2, 32) is regulated to a predetermined value or according to a predetermined program.

4. Method according to one of the preceding claims, **characterized in that** the refrigerant used is a liquefied or cold gaseous gas, for example nitrogen or carbon dioxide.

5. Apparatus for carrying out the method according to one of the preceding claims, with a cooling duct (2, 32) which has a product inlet (4, 34) and a product outlet (5, 35) and also an extraction connection (9, 39), a supply connection (8, 38) for a cooling medium and a cooling-medium line (10, 40) between the extraction connection (9, 39) and supply connection (8, 38), the supply connection (8, 38) being flow-connected to a heat exchanger (15, 45) for the purpose of heat exchange with a refrigerant delivered via a refrigerant supply line (17), and the refrigerant supply line (17) issuing, after the heat exchanger (15, 45), into the cooling-medium line (10, 40) upstream or downstream of the heat exchanger (15, 45) in terms of flow.

6. Apparatus according to Claim 5, **characterized in that** the cooling duct (2, 32) is equipped with a gas sluice (18, 19, 47) in the region of the product inlet (4, 34) and/or of the product outlet (5, 35).

7. Apparatus according to Claim 5, **characterized in that** the cooling duct (2, 32) is connected, essentially gas-tight, to a device for producing the product, for example to an extruder (6, 36).

8. Apparatus according to one of Claims 5 to 7, **characterized in that** the cooling duct (2, 32) is arranged essentially vertically.

## Revendications

1. Procédé pour le refroidissement de produits, dans lequel on fait circuler un produit dans un canal de refroidissement et on le soumet à un échange de chaleur avec un fluide de refroidissement dans le canal de refroidissement (2, 32), dans lequel on prélève le fluide de refroidissement au moins partiellement hors du canal de refroidissement (2, 32) en au moins un point de prélèvement, on soumet de fluide de refroidissement prélevé à un échange de chaleur avec un agent réfrigérant et on le renvoie ensuite dans le canal de refroidissement (2, 32) en un point d'alimentation, **caractérisé en ce que** l'on envoie l'agent réfrigérant au moins partiellement dans le canal de refroidissement (2, 32) après le contact thermique avec le fluide de refroidissement.

2. Procédé selon la revendication 1, **caractérisé en ce que** l'on conduit le fluide de refroidissement à contre-courant avec le produit dans le canal de refroidissement (2, 32).

3. Procédé selon la revendication 1 ou 2, **caractérisé en ce que** l'on régule le débit et/ou la température du fluide de refroidissement prélevé hors du canal de refroidissement (2, 32) ou envoyé dans celui-ci à une valeur prédéterminée ou selon un programme prédéterminé.

4. Procédé selon l'une quelconque des revendications précédentes, **caractérisé en ce que** l'on emploie comme agent réfrigérant un gaz liquéfié ou un gaz gazeux froid, par exemple de l'azote ou du dioxyde de carbone.

5. Dispositif pour la mise en oeuvre du procédé selon l'une quelconque des revendications précédentes, avec un canal de refroidissement (2, 32), qui présente une entrée de produit (4, 34) et une sortie de produit (5, 35) ainsi qu'un raccord de prélèvement (9, 39), un raccord d'alimentation (8, 38) pour un fluide de refroidissement et une conduite de fluide de refroidissement (10, 40) entre le raccord de prélèvement (9, 39) et le raccord d'alimentation (8, 38), dans lequel le raccord d'alimentation (8, 38) est relié en relation d'écoulement avec un échangeur de chaleur (15, 45) pour un échange de chaleur avec un agent réfrigérant amené au moyen d'une conduite d'alimentation d'agent réfrigérant (17) et la conduite d'alimentation d'agent réfrigérant (17), à la suite de l'échangeur de chaleur (15, 45), débouche dans la conduite de fluide de refroidissement (10, 40), selon la technique d'écoulement avant ou après l'échangeur de chaleur (15, 45).

6. Dispositif selon la revendication 5, **caractérisé en ce que** le canal de refroidissement (2, 32) est muni d'un sas à gaz (18, 19, 47) dans la région de l'entrée de produit (4, 34) et/ou de la sortie de produit (5, 35) .

7. Dispositif selon la revendication 5, **caractérisé en ce que** le canal de refroidissement (2, 32) est relié de façon essentiellement étanche au gaz à un dispositif de fabrication du produit, par exemple une extrudeuse (6, 36).

8. Dispositif selon l'une quelconque des revendications 5 à 7, **caractérisé en ce que** le canal de refroidissement (2, 32) est essentiellement vertical.
